# EUROPEAN PATENT SPECIFICATION

(11) **EP 1 924 465 B1**
(45) Date of publication and mention of the grant of the patent: **11.04.2012**
(21) Application number: 06802799.4
(22) Date of filing: 01.09.2006
(51) Int. Cl.: B60N 2/48

(54) **ACTIVE HEAD RESTRAINT SYSTEM**
AKTIVES KOPFRÜCKHALTESYSTEM
SYSTEME D'APPUI-TETE ACTIF

(30) Priority: 01.09.2005 US 713431 P; 18.11.2005 US 738403 P
(43) Date of publication of application: 28.05.2008
(60) Divisional application: 10015663.7
(73) Proprietor: Johnson Controls Technology Company, Holland, MI 49423 (US)
(72) Inventor: SIEGRIST, Ronald, R., Grass Lake, MI 49240 (US); SAVESKI, Alexander, South Lyon, MI 58178 (US)
(74) Representative: Wolff, Felix
(86) International application number: PCT/US2006/034223
(87) International publication number: WO 2007/028015

(56) References cited:
- EP-A- 0 967 115
- EP-A- 1 609 666
- DE-A1- 19 951 967
- DE-C1- 10 232 017
- US-A1- 2004 155 496

## Description

### RELATED PATENT APPLICATIONS

The present application claims the benefit of U.S. Provisional Patent Application No. 60/713,431 ("Active Head Restraint Actuator") filed September 01, 2005 and U.S. Provisional Patent Application No. 60/738,403 ("Active Head Restraint and Actuator Arrangements") filed November 18, 2005 each under 35 U.S.C. § 119.

### FIELD OF THE INVENTION

The present invention relates generally to a vehicle seat having an active head restraint with improved support of an occupant during rearward vehicle impact. More particularly the present invention relates to an actuator for an active head restraint system.

### BACKGROUND

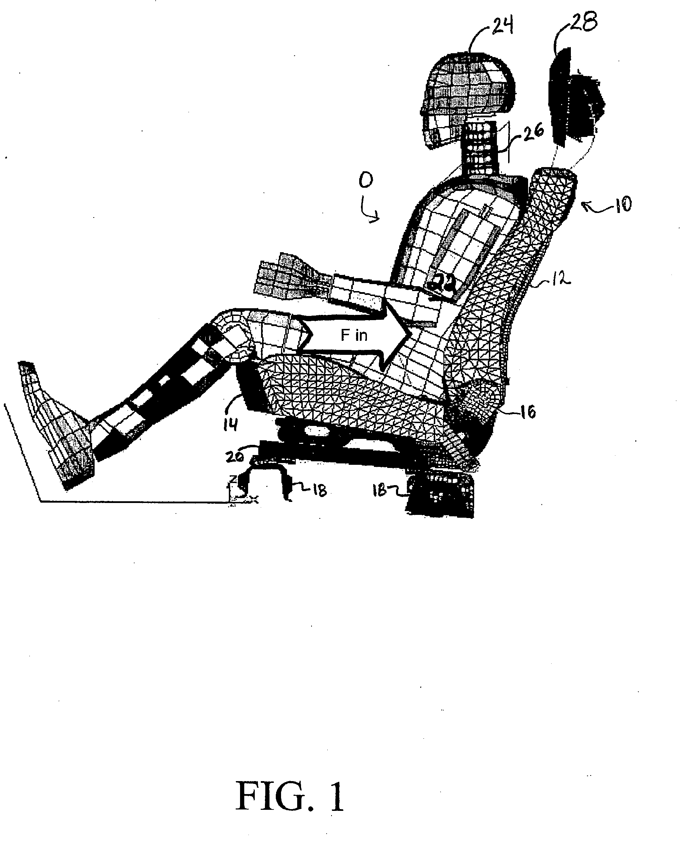

It is known to provide a vehicle seat having an active head restraint system for reducing whiplash in a rear or frontal impact crash. Such known active head restraint systems typically include an active head restraint that is biased toward a first position, a latch for latching the biased head restraint and an actuator that is responsive to the movement of a vehicle occupant to release the latch. It has been observed that during a rear impact the occupant's body will move reward with respect the vehicle seat (as shown in FIG. 1). Active head restraint systems have taken advantage, of this observation by using the occupant's "body weight" (i.e., the force of the occupant against the seat back of the vehicle seat) to actuate the active head restraint system. For example, in one arrangement an actuator is located in a lower region of the seat back and the actuator is triggered to release a latch to allow the active head restraint to move into a position to better support the occupant's head. Another known arrangement utilizes a pivoting head rest having a target connected with the pivoting head restraint and located in the midsection of the seat back. The target receives the rearward force from the occupant's body which causes the active head restraint to pivot forward toward the head of the occupant.

It is also known to use a split active head restraint. The split active head restraint includes a front portion movable with respect to the seat and toward the occupant's head, typically in response to the relative movement of the occupant into the vehicle seat. One system includes a spring-loaded head restraint that translates upward from the seat back. The spring-loaded active head restraint includes a simple latch that is weight-activated to release and deploy the head restraint in an impact.

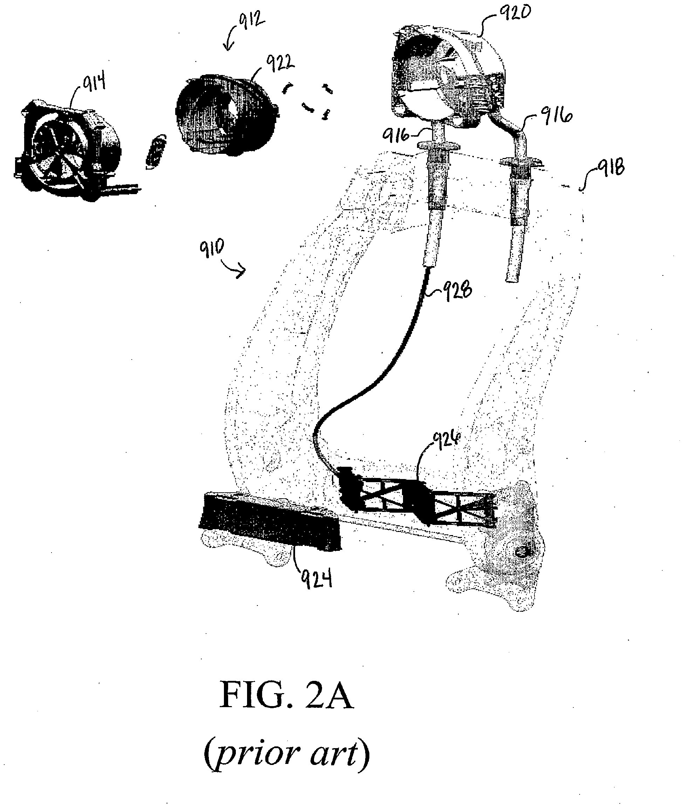

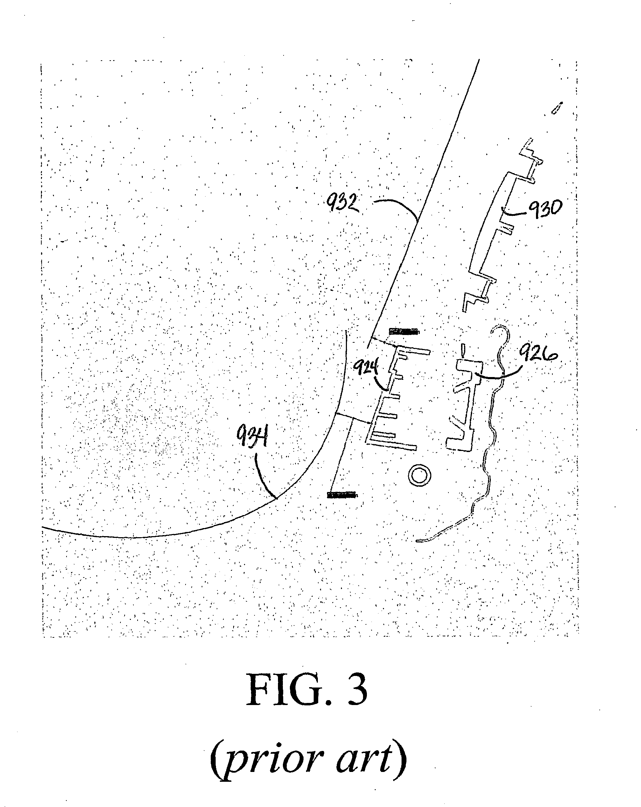

To reduce whiplash resulting from a rear impact some contemporary designs provide an active head restraint system 910 as illustrated in FIGs 2A-C and 3. The active head restraint system 910 includes a head restraint 912 which enables a front portion 914 of the head restraint 912 to move forward when a force is applied to the back portion of the seat assembly. The active head restraint includes two support members 916 mounted with respect to the head restraint to a frame member 918 of the seat. The head restraint 912 includes a housing 920 that encloses a cam ring 922 - the driving member of the active head restraint 912. The cam ring 922 drives the front portion 914 of the head restraint 912 upon actuation. An actuator 924 is located in the bottom portion of the seat back. A set of trusses 926 are coupled to the seat back and connected to a Bowden cable 928. Compression of the trusses 924 with respect to the seat back applies a tensile force to the Bowden cable 928 and actuates the head restraint system 910. The head restraint 912 and its operation is more fully disclosed in German Patent Application DE 102 15 137.7, entitled "Head Rest for Vehicle Seat" and U.S. Patent App. No. 2005/0077762 A1, filed August 4, 2004, entitled, "Head rest for the Seat of a Vehicle", both of which are commonly assigned.
With the prior art design illustrated in FIGs 2A-C as the lumber 930 moves forward with respect to the seat, the trusses of the actuator 924 may not be able to depress completely or the process may be slowed thereby producing a slower response time for the active head restraint system. Moreover, the articulated actuator 924 in some embodiments may interfere with other parts of the seat assembly such as the power recliner components thereby decreasing the effectiveness of the active head restraint system and the seat assembly. For example, an adjustable lumbar or power adjustable recliner increases user comfort and convenience by enabling simpler and broader adjustments of the seat back with respect to the seat bottom. Neither are compatible with the articulated actuator 924 illustrated in FIGs 2A-C.

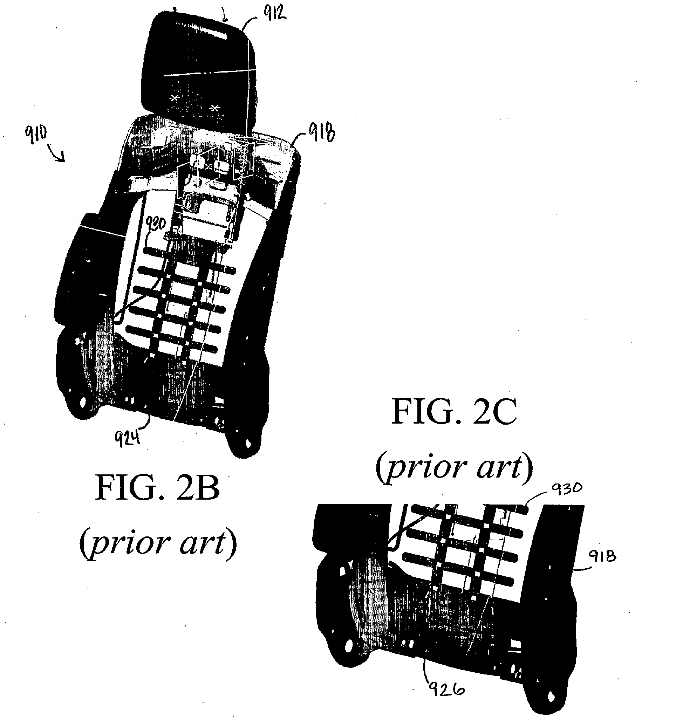

Moreover, while the design illustrated in FIGs 2-3 is functional it requires a significant amount of packaging space within the seat back portion of the seat assembly. For example, as illustrated in FIG. 3, there is shown a vehicle seat having an occupant and an articulated actuator 924 which fails to meet the minimum packaging space requirements. Comfort criteria for vehicle seats require a minimum clearance (typically on the order of approximately 35 mm) between the hard components of the vehicle seat (e.g., actuator plate or lumbar support) and the occupant. In applying the contemporary actuator design, the clearance between the occupant's mid-section 932 and the actuator plate 924 is approximately half the required minimum and the clearance between the occupant's buttocks 934 and the actuator plate 924 is approximately two-thirds the requirement minimum. While simply moving the actuator rearward with respect to the seat frame seems simple and logical, to do so would require redesigning and reengineering the seat frame which when successful will still result in a highly undesirable lessening of the available foot space for occupants seated behind the vehicle seat. Additionally, simply reengineering the seat frame will also not improve the response time of the actuator which is generally greater than desired.

German patent DE 102 32 017 C1 discloses a vehicle seat comprising a head restraint, wherein the head restraint is movable with respect to the seat back portion in response to a displacement of a link: wherein an actuator comprises a first and a second end, wherein the first end is coupled to a link. U.S. Patent Application Publication No. 2004/0155496 A1 discloses a vehicle seat for use with a vehicle. The vehicle seat includes a seatback frame having a first locking element, and a head restraint arrangement movably associated with the seatback frame. During a rear crash event, sufficient rearward loading causes the head restraint arrangement to pivot with respect to the seatback frame about a pivot axis in which an impact target moves rearwardy and upwardly with respect to the seatback frame. This movement of the impact target causes vertical risers to move upwardly through guide channels. As the risers move upwardly,interaction between the risers and the guide channels causes the risers to rotate forwardly, thereby causing the head restraint to move forwardly, in addition to moving upwardly. As a result, the head restraint moves from an initial position to a fully actuated position or support position for providing support to the head of the occupant. Accordingly, it would be desirable to provide an improved active head restraint system.

### SUMMARY

One embodiment of the present invention as defined by independent claim 1, relates a vehicle seat haying a seat back having a seat back frame with first and a second side members and an upper cross support member. An active head restraint system according to the present invention provides a pivotable (or leveragable) actuator pivotably connected with respect to the seat' back frame and a cable is coupled to the active head restraint mechanism and the actuator.

In an alternative embodiment, the actuator includes a movable link member that is biased with respect to the seat back frame and the active head restraint includes two pivotable head rest supports mounted with respect to the cross support member of the seat back frame. The head restraint supports abut a movable second cross member which is connected to the link member.

In one embodiment of the present invention the link is a flexible member, such as a Bowden cable. The cable has an inner cable member and an outer sheath and the inner cable member is moveable with respect to the outer sheath. Further included is a pulley coupled with respect to the seat back frame and configured in a manner to guide the inner cable during actuation of the active head restraint.

In one embodiment of the present invention, the actuator is a single-piece member having a first arm, a second arm and cross bar member. The actuator may also be made from multiple components that have been mechanically fastened together. The first arm and second arm are pivotably connected with respect to the seat back frame at respective locations on the seat back frame. The cross bar member is connected to the first and second arms. The cross bar member is positioned in a manner to be affected by the occupant upon a predetermined amount of rearward movement of the occupant with respect to the seat back frame. The actuator has a response time that varies according to the distance between a pivot point of the actuator and the cross bar member.

In another embodiment of the present invention the vehicle seat has a seat back portion and a seat bottom portion which are pivotably connected with respect to each other. The vehicle seat also includes a recliner assembly operative to selectively rotate and lock the seat back portion of the vehicle seat with respect to the seat bottom portion and includes a recliner rod (or cross-talk tube) extending across the back portion of the passenger seat to communicate between inboard and outboard recliner mechanisms.

In one embodiment, a vehicle seat includes a head restraint and a seat back portion. The head restraint is coupled to the seat back portion. The seat back portion defines an axis and the head restraint is movable with respect to the seat back portion along the axis in response to a displacement of a link. An actuator includes a first and a second end. The first end is coupled to the link. The seat back portion further includes a side member and the second end of the actuator is pivotably coupled to the side member. The link is a cable and the seat back portion includes a pulley coupled thereto and the pulley is configured in a manner to assist in moving between the cable between the head restraint and the actuator.

In another exemplary embodiment, as defined by independent claim 12, a vehicle occupant seat, includes a head restraint and a seat back portion. The head restraint is coupled to the seat back portion. The seat back portion defines an axis aligned with a direction of travel of the vehicle and the head restraint is movable with respect to the seat back portion along the axis in response to a displacement of a link. The seat back portion includes a lower back member; and a flexible actuator coupled to the lower back member. The actuator includes a first and second member and the first member is pivotably coupled with respect to the second member. A cam link is coupled to the first member and second member. A pulley is coupled to the cam link and slidable with respect to the second member. The second member includes a slot through which the cam link may move transversely with respect to the second member. The link is coupled to the second member and the head restraint. The link is guided though the pulley in a manner to displace the link upon sliding movement of the pulley.

In another exemplary embodiment, as defined by independent claim 13, a vehicle seat includes a head restraint and a seat back portion. The head restraint is coupled to the seat back portion. The seat back portion defines an axis and the head restraint is movable with respect to the seat back portion along the axis in response to a displacement of a link. The seat back portion further includes a first and second side member and a pulley through which the link is guided. The pulley is coupled to the first side member and an actuator is rigidly coupled to the link between the first side member and second side member so that movement of the actuator displaces the link in a manner to move the head restraint.

In another not claimed exemplary embodiment, a vehicle seat, includes a head restraint and a seat back portion. The head restraint is coupled to the seat back portion. The seat back portion defines an axis and the head restraint is movable with respect to the seat back portion along then axis in response to a displacement of a link. A flexible actuator includes a first and second end, the first end is coupled to the link. The seat back portion further includes a side member and the second end of the actuator is pivotably coupled to the side member. The link is a cable and the side back portion includes a pulley coupled thereto. The pulley is configured in a manner to assist in transitioning the cable between the head restraint and the first end of the actuator. The actuator is flexible.

### BRIEF DESCRIPTION OF THE DRAWINGS

FIG. 1 is a schematic side view of a passenger seat during a rear impact.

FIG. 2A is a schematic view of an active head restraint according to a prior art design.

FIG. 2B is a schematic view of an active head restraint with lumbar support according to a prior art design.

FIG. 2C is a schematic view of the lumbar support and articulated actuator according to a prior art design.

FIG. 3 is a schematic view of an passenger seat illustrating the clearances provided with a prior art actuator.

FIG. 4 is a schematic view of a vehicle seat with an active head restraint system according to the one exemplary embodiment of the present invention.

FIG. 5A is a schematic side view of an active head restraint system before an impact according to one exemplary embodiment.

FIG. 5B is a schematic side view of an active head restraint system after impact according to one exemplary embodiment.

FIG. 6 is a schematic view of an active head restraint system and actuator according to one exemplary embodiment of the present invention.

FIG. 7 is a schematic view of the actuator isolated from the active head restraint system according to one exemplary embodiment of the present invention.

FIG. 8 is a schematic view of a vehicle seat with recliner mechanism and active head restraint system according to an alternate exemplary embodiment of the present invention.

FIG. 9 is a schematic view of an active head restraint system according to one exemplary embodiment of the present invention.

FIG. 10 is a schematic view of an active head restraint system according to one exemplary embodiment of the present invention.

FIG. 11 is a schematic view of the actuator isolated from the active head restraint system according to one exemplary embodiment of the present invention.

FIG. 12 is a schematic view of a vehicle seat with an active head restraint system according to the one exemplary embodiment as shown in FIG. 11.

FIG. 13 is a schematic view of a vehicle seat with an active head restraint system according to the one exemplary embodiment as shown in FIG. 11.

FIG. 14 is a schematic view of a vehicle seat with an active head restraint system according to the one exemplary embodiment of the present invention.

FIG. 15 is a schematic view of a vehicle seat with actuated head restraint system according to the one exemplary embodiment as shown in FIG. 14.

FIG. 16 is a schematic view of a vehicle seat with an active head restraint system according to the one exemplary embodiment of the present invention.

FIG. 17 is a schematic view of a vehicle seat with an active head restraint system according to the one exemplary embodiment as shown in FIG. 16.

FIG. 18A is a side schematic view of an active head restraint system and actuator arrangement in a first position according to one embodiment as shown in FIGs 16 and 17.

FIG. 18B is a side schematic view of an active head restraint system and actuator arrangement in a second position according to the embodiment as shown in FIGs 16 and 17.

FIG. 19 is a schematic view of a vehicle seat with an active head restraint system according to the one exemplary embodiment of the present invention.

FIG. 20 is a schematic view of a vehicle seat with an active head restraint system according to the one exemplary embodiment.

FIG. 21A is a schematic view of a vehicle seat with an active head restraint system according to the one exemplary embodiment of the present invention.

FIG. 21B is a schematic view of a vehicle seat with an active head restraint system according to the one exemplary embodiment of the present invention.

FIG. 22 is a schematic view of a vehicle seat with an active head restraint system according to the one exemplary embodiment of the present invention.

FIG. 23 is a schematic view of a vehicle seat with an active head restraint system according to the one exemplary embodiment as shown in FIG. 22.

FIG. 24 is a schematic view of a vehicle seat with an active head restraint system according to the one exemplary embodiment as shown in FIG. 22.

### DETAILED DESCRIPTION

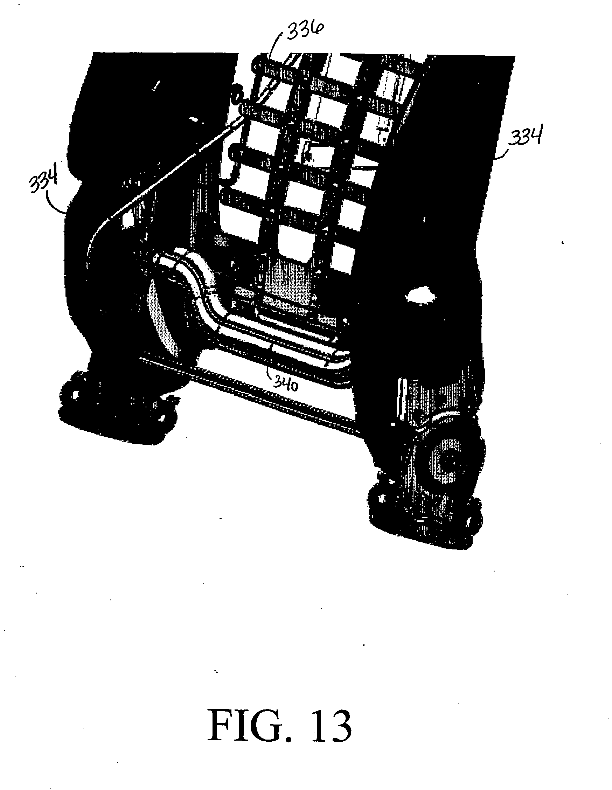

Referring generally to FIGs 1-24 and in particular to FIG. 1 a vehicle seat assembly 10 includes a seat back portion 12 and a seat bottom portion 14. The seat back portion 12 may be pivotably connected to the seat bottom portion 14 through a recliner 16. The seat assembly 10 may be secured to the vehicle 18 through a rail system 20 operative to move the seat forward and rearward with respect to the vehicle 18 or may otherwise be directly attached to the floor. An occupant 'O' is shown positioned in the seat assembly 10 in an upright or design position in FIG. 1. During a rear vehicle impact the seat back 12 of the seat assembly 10 is forced against a mid-section 22 of the vehicle occupant O such that the occupant moves rearward relative to (or into) the seat assembly 10 with a force (Fᵢₙ) which has a reactive force from the seat against the the occupant. If the force (Fᵢₙ) is substantial enough the head portion 24 of the occupant O may move rearward at a significant rate causing strain to the neck region 26 of the occupant O. Such an injury is commonly referred to as "whiplash". The head restraint 28 is actuable to better support the head portion 24 of the occupant O in such instances.

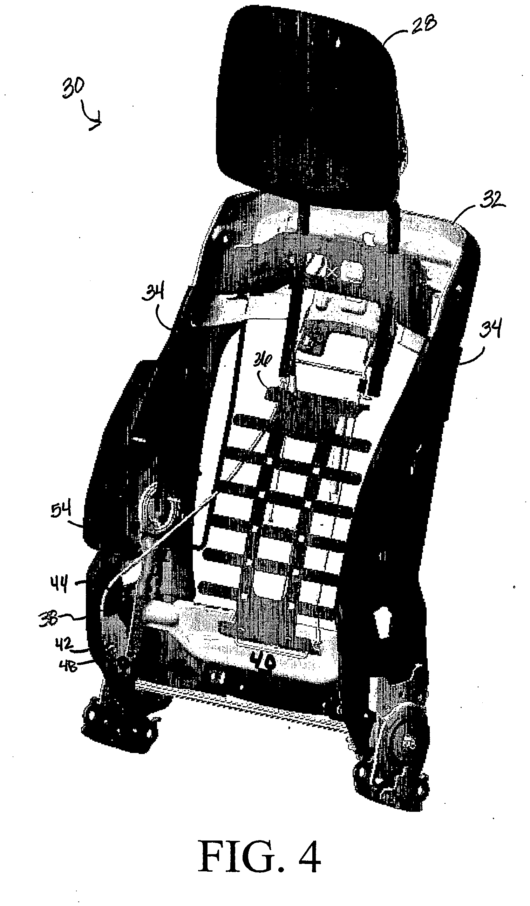

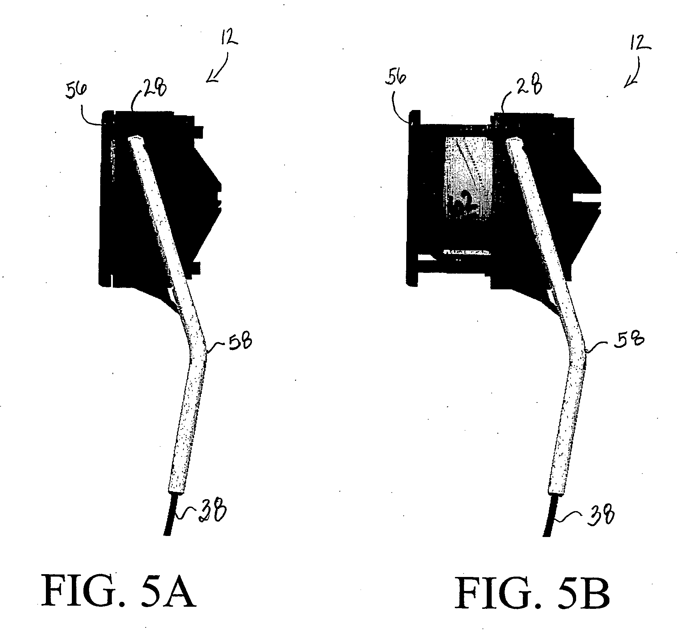

Referring to FIGS. 4-13, and in particular to FIG. 4, the present invention provides an active head restraint system 30 for an automobile seat assembly 10. The seat 10 includes a frame 32 to which the active head restraint 28 may be mounted. The frame 32 includes two side members 34. The frame 32 may also include other brackets and cross members to support the function of the seat assembly 10. For example, the frame 32 includes an adjustable lumbar support 36 which functions to support the midsection 22 of the occupant O as illustrated in FIG. 1. As illustrated in FIGs 5A-B, the seat assembly 10 includes an active head restraint system 12 which provides a head restraint 28 that enables a front portion 56 of the head restraint 28 to move opposite Fᵢₙ, shown in FIG. 1, when the force is applied to the seat back 12 of the seat assembly. The active head restraint includes two support members 58 coupled to the head restraint 28 and secured in a sliding relationship with respect to the seat frame 32. The head restraint 28 includes a housing 60 that encloses a cam ring 62, which drives the front portion 56 of the head restraint 28 toward the occupant head 24 upon actuation. A link 38 is provided to actuate the active head restraint system 30 upon movement of the occupant O as disclosed in the above-referenced U.S. Patent App. No. 2005/0077762 A1.

The head restraint 28 is responsive to the movement of a link 38 as illustrated in FIG. 4. The link 38 (or cable) is coupled to the head restraint 28 and an actuator 40. In one exemplary embodiment, the link 38 is a flexible cable having an inner portion 42 that is movable with respect to an outer portion 44 - an arrangement commonly referred to as a "Bowden cable". The inner portion 42 is directly coupled to the actuator 40 at point 46. The inner portion 42 of the link 38 is guided through a pulley 48. The pulley 48 is mounted to the side member 34 of the frame 32 through a side bracket 50. In some instances where the back frame allows, the pulley 48 may be attached directly to the side member 34 without the side bracket 50.

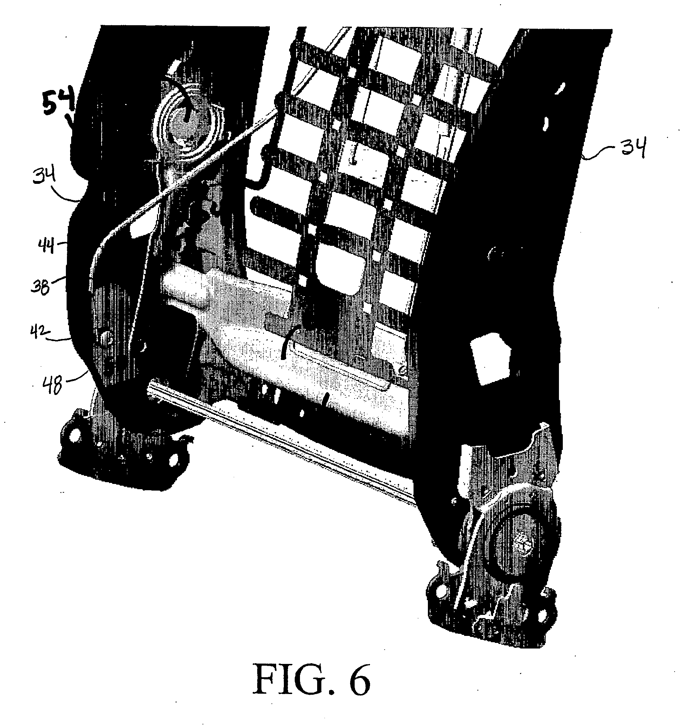

The actuator 40 is pivotably mounted at pivot 52 with respect to the side member 34 through side bracket 54 as illustrated in FIGs 4 and 6-7. In some instances where the back frame allows, the actuator 40 is pivotably mounted directly to the side member 34 at pivot 52. As shown in FIGs 6-7, the actuator 40 is preferably a single-piece member having a first portion or arm 64, a second portion or arm 66 and a third portion or cross bar 68 but alternatively may be made of a plurality of assembled parts. The first and second arms 64 and 66, respectively, are formed perpendicular with respect to the cross bar 68. Either the first arm 64 or the second arm 66 may be connected to the inner portion 42 of the link 38 at the base of the first or second arm 64 and 66, respectively. The link 38 is routed through pulley 48 and coupled to the side member 34. The first and second arms 64 and 66 are pivotably mounted to the side members 34 at pivot point 52. The cross bar 68 thereby rotates with respect to the frame 32 about pivot point 52. The head restraint 28 deploys upon a predetermined amount of rotation of the actuator 40 with respect to the frame 32. The head restraint 28 may be configured to deploy completely upon a predetermined amount of rotation of the actuator 40 or to deploy progressively as the actuator 40 rotates In one exemplary embodiment, the actuator 40 is preferably constructed from steel, however, in other exemplary embodiments the actuator is composed of aluminum, metallic alloy and/or other appropriate polymeric materials such as reinforced plastics.

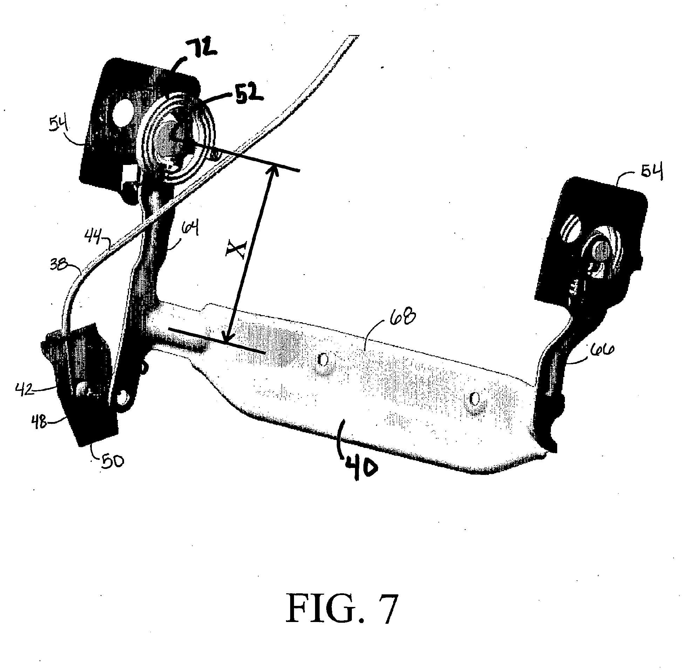

Referring to FIG. 7 the first arm 64 of the actuator 40 is shown coupled to the side member 34 at the end of the arm. The actuator is coupled to the link 38 at coupling 70. The cross bar 68 pivots about pivot point 52 at a predetermined distance, X, from the location of the actuator coupling with respect to the seat frame 32. The response time of the head restraint system 30 may vary according to distance X. The distance X between the cross bar 68 of the actuator 40 and the location of the actuator coupling to the side member 34 may be decreased thereby decreasing the response time of the head restraint system 30. Alternatively, distance X may be increased to increase the response time of the head restraint system 30 to accommodate desired performance characteristics.

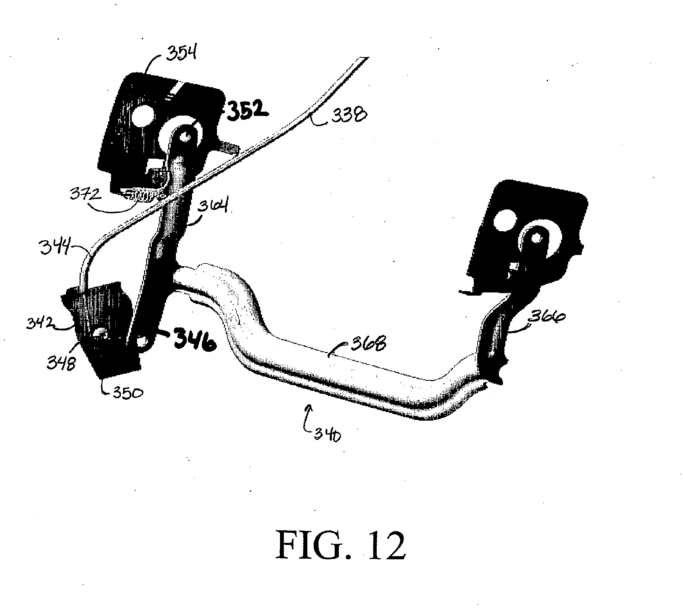

In the illustrated exemplary embodiment of FIGs 4 and 6-7, the first arm 64 is biased with respect to the side member 34 of the frame 32 with a return spring 72. The spring 72 is a spiral or "clock" spring coupled to the side member 34 and the first arm 64 of the actuator 40. The resistive force provided by the spring 72 may vary in different arrangements. For example, where it is desirable to have a relatively fast actuation of the active head restraint system 30 the spring constant of the spring 72 may be respectively lower than other arrangements to provide a lower resistive force opposing the rotation of the actuator 40. Conversely, in another exemplary embodiment, where it is desirable for the active head restraint system 30 to have a relatively longer response time, the spring constant of spring 72 may be relatively greater than other arrangements to provide a stronger resistive force opposing the rotation of the actuator 40 with respect to the seat assembly 12. In another embodiment, the spring 72 is a linear or "coil" spring (e.g., 372 as shown in FIG. 12). It should be understood that any type of biasing mechanism may be utilized.

A pulley 48 is provided, as shown in FIG. 7, through which the inner portion 42 of the link 38 is routed. As the actuator 40 is forced rearward (or in the Fᵢₙ direction) a tensile force is applied to the inner portion 42 of the link 38. Since the inner portion 42 of the link is routed through the pulley 48 the force placed on the inner portion of the link is doubled with respect to the moment arm causing the actuator 40 to rotate with respect to the side member 34. The pulley 48 thereby increases the force applied to the link 38, reducing the response time of the active head restraint system 30. In another exemplary embodiment, a plurality of pulleys are provided with active head restraint system 30. Each pulley is coupled with respect to the seat frame 32. Traversing each pulley enhances or magnifies the resulting tensile force placed on the link in actuation of the active head restraint system 30. In another alternative embodiment, a pulley is not included in the seat assembly 12.

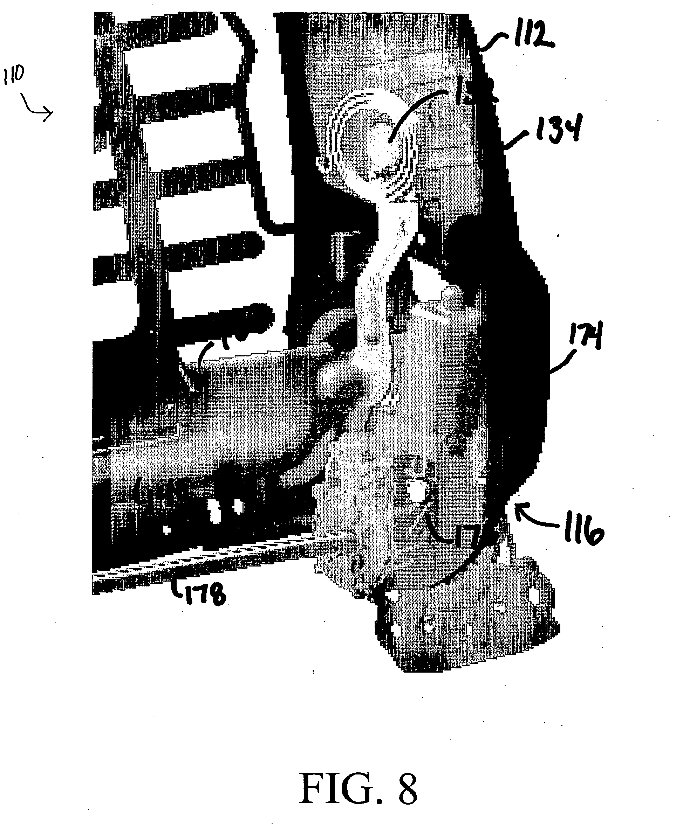

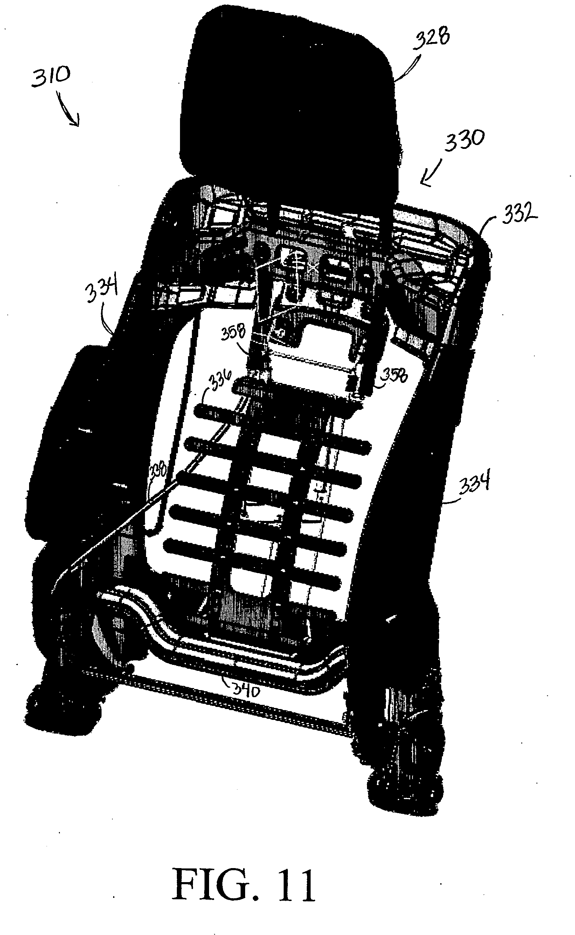

In one exemplary embodiment, as illustrated in FIG. 8, a recliner 116 is included with the seat 110. The recliner mechanism 116 may either be motor driven or manually operated to rotate the seat back 112 with respect to bottom portion (e.g. 14 as shown in FIG. 1) of the seat 110. The recliner mechanism 116 preferably includes an electric motor 174, a transmission 176 and a transmission rod 178 to unlock the seat and enable rotation of the back portion 112 of the seat 110 with respect to the bottom portion of the seat 110. The actuator 140 is configured so that the cross bar 168 avoids interference with the components of the recliner 116 during actuation. In one exemplary embodiment, as illustrated, for example, in FIGs 11-13, a cross bar 368 is contoured so that the cross bar 368 and second arm 366 do not collide with the electric motor 374 and transmission 376 of the recliner. The actuator 340 is mounted to the side member 334 with sufficient distance between the actuator 340 and recliner 316 to avoid collision with the release rod 378.

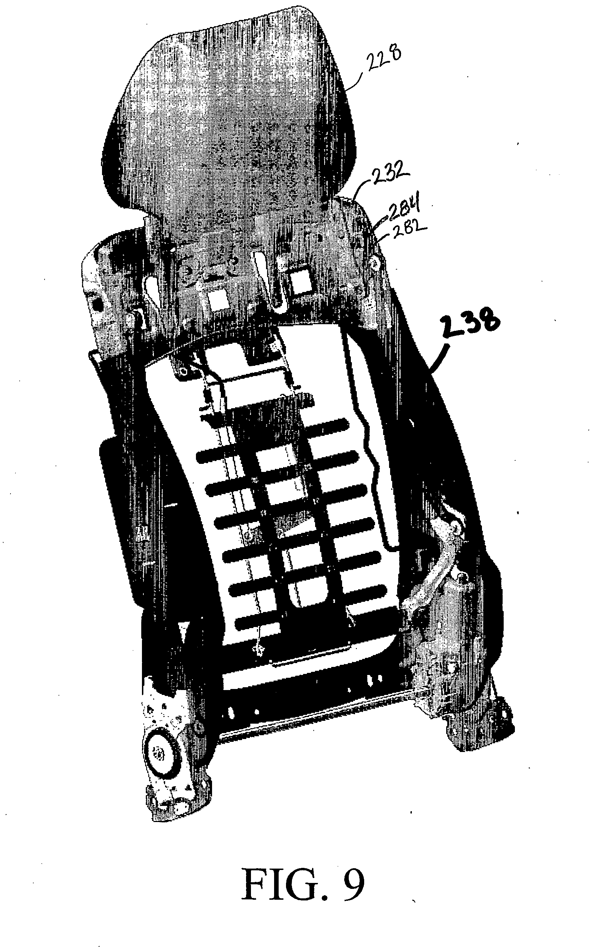

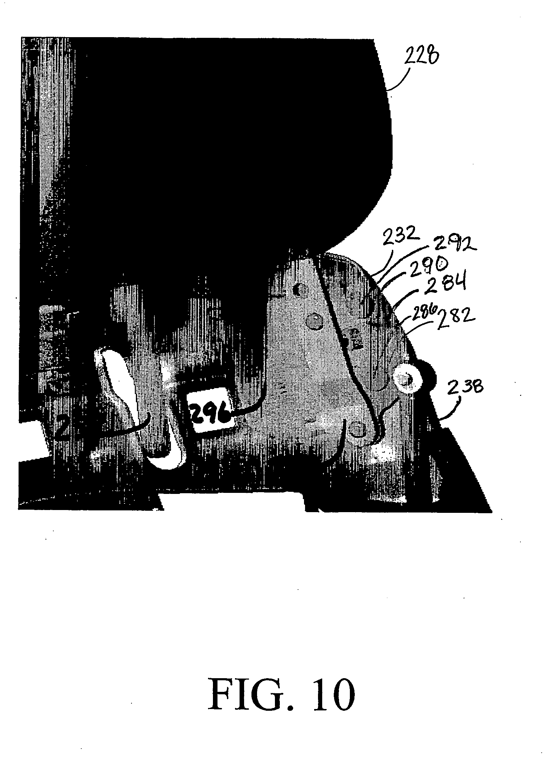

In another embodiment of the present invention, as illustrated in FIGs 9 and 10, the active head restraint 228 pivots forward with respect to the vehicle (or in the opposite direction of Fᵢₙ). The supports 258 abut a movable cross member 294 which is indirectly connected to a link 238. As shown in FIG. 10, the link 238 is coupled to a rotatable transfer link 282 which is pivotably connected to the frame member 232 through side bracket 284 at pivot 286. The transfer link 282 is also connected to a second link 288. The link 288 is pivotably connected to a third or lifting link 290 which is also pivotably connected to the side bracket 284 at pivot 292. The drivable link 288 is also coupled to the cross member 294 which abuts the pivotable supports 258 of the head rest 228. Upon downward motion of the link 238 the drivable link 288 forces the cross member 294 against the pivotable supports 258 thereby moving the head restraint 228 forward with respect to the vehicle. The side bracket 284 includes a spring 296 coupled thereto and to the cross member 294 to provide a predetermined resistive force opposing the motion of the cross member 294. In the illustrated exemplary embodiment of FIGs 9-10, the spring 296 is a linear spring; however in alternative exemplary embodiments, the spring may be a spiral spring or any other biasing mechanism known within the art.

In another exemplary embodiment, the actuator 340 is detached from the lumbar support 336 of the frame member 332 as shown in FIGs 11-13. The seat 310 includes a frame 332 to which the active head restraint 328 may be mounted. The frame 332 includes two side members 334. The active head restraint 328 includes two support members 358 coupled to the head restraint 328 and secured in a sliding relationship with respect to the seat frame 332. A link 338 is provided to actuate the active head restraint system 330 upon movement of the occupant O. The head restraint 328 is responsive to the movement of a link 338 as illustrated in FIG. 11. The link (or cable) 338 is coupled to the head restraint 328 and the actuator 340. In one exemplary embodiment, the link 338 is a Bowden cable having an inner portion 342 that is movable with respect to an outer portion 344 as shown in FIG. 12. The inner portion 342 is directly coupled to the actuator 340 at point 346. The inner portion 342 of the cable 338 is guided through a pulley 348. The pulley 348 is mounted to the side member 334 of the frame member 332 through a side bracket 350. In some instances where the back frame allows, the pulley 348 may be attached directly to the side member 334 without the side bracket 350.

The actuator 340 is pivotably mounted at pivot 352 with respect to the side member 334 through side bracket 354 as illustrated in FIG. 12. The actuator 340 is a single-piece member having a first portion or arm 364, a second portion or arm 366 and a third portion or cross bar 368. The first and second arms 364 and 366, respectively, are formed perpendicular with respect to the cross bar 368. Either the first arm 364 or the second arm 366 may be connected to the inner portion 342 of the cable or link 338 at the base of the first or second arm 364 and 366, respectively. The link 338 is routed through pulley 348 coupled to the side member 334. The first and second arms 364 and 366 are pivotably mounted to the side members 334 at pivot point 352. The cross bar 368 thereby rotates with respect to the frame 332 about pivot point 352. The head restraint 328 may deploy upon a predetermined amount of rotation of the actuator 340 with respect to the frame 332. In one exemplary embodiment, the actuator 340 is constructed from steel, however, in other exemplary embodiments the actuator may be composed of aluminum, metallic alloys and/or reinforced plastics as may be appropriate or desired for a given application.

In the illustrated exemplary embodiment of FIGs 11-13 the first arm 364 is biased with respect to the side member 334 of the frame 332 with a return spring 372. The sprig 372 is a linear spring commonly coupled to the side member 334 and the first arm 364 of the actuator 340. The resistive force provided by the spring 372 may vary in different arrangements. For example, where it is desirable to have a relatively fast actuation of the active head restraint system 330 the spring constant may be respectively lower than other arrangements to provide a lower resistive force opposing the rotation of the actuator 340. Conversely, in another exemplary embodiment, where it is desirable for the active head restraint system 330 to have a longer response time, the spring constant may be relatively greater than other arrangements to provide a stronger resistive force opposing the rotation of the actuator 340 with respect to the seat assembly 310.

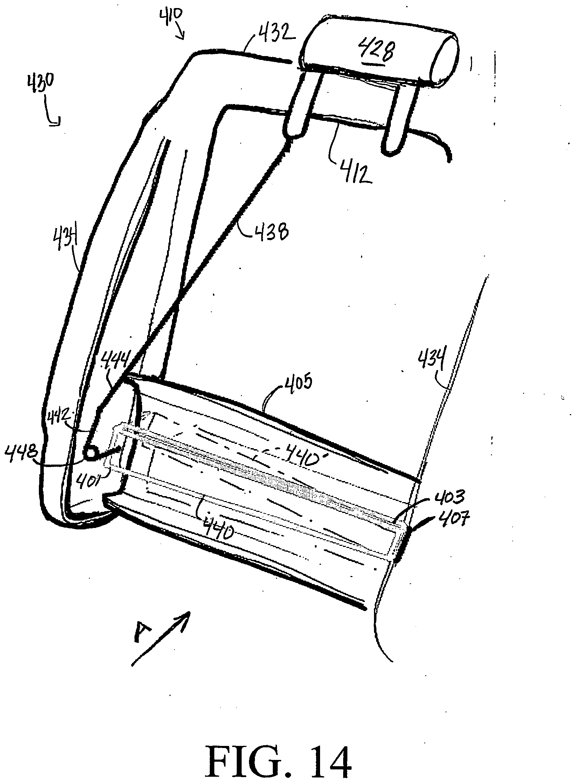

Referring to FIGs 14-15, is an illustrated exemplary embodiment of the present active head restraint system 430 for a vehicle seat assembly 410. The seat assembly 410 includes an actuator frame 440 in which a first end 401 of the actuator frame is free to move along the direction in which the Fᵢₙ force is applied or along the A axis. A second end 403 of the actuator frame is pivotably connected to a side member 434 of the seat frame 432.

The seat frame 432 includes side members 434 which provide structural support to the seat frame 432. The side members 434 are pivotably connected to the seat bottom portion of the vehicle occupant seat 410 to enable the seat back portion 412 to recline with respect to the seat bottom. In the illustrated exemplary embodiment, the seat back portion 412 further includes a lower back member 405 which further provides structural reinforcement to the seat back portion 412. Though in the illustrated exemplary embodiment the lower back member 405 is schematically depicted as a uniform concave member, the lower back portion 405 may have various constructs including a substantially flat cross member. The seat back portion 412 further defines the A axis as shown in FIG. 14, which is in the direction of application of the Fᵢₙ force. During rear impact the vehicle occupant O typically moves substantially along the A axis, i.e., rearward with respect to the seat back 412.

The head restraint is movable with respect to the seat back 412 along the axis A in response to the displacement of a link 438, as shown in FIG 14. The link 438 is a Bowden cable and is coupled to the head restraint 428 and the actuator frame 440. In the exemplary embodiment shown in FIG. 14, the link 438 has an inner portion 442 that is movable with respect to an outer portion 444. The inner portion 442 is directly coupled to the actuator frame 440 at the first end 401 of the actuator frame and guided through a pulley 448. The link 438 is spring biased with respect to the first end 401 of the actuator frame 440 so that the rest position of the first end of the actuator frame is forward the actuated position 440' of the first end of the actuator frame.

The actuator frame 440, as shown in the illustrated embodiment of FIGs 14-15, defines a first end 401 and a second end 403. In the illustrated exemplary embodiment, the second end 403 of the actuator frame 440 is coupled to the side member 434 via a panel hinge 407 (e.g., a piano hinge). The second end 403 rotates about the side member 434 of the seat back portion 412. In one alternative exemplary embodiment, a cross member (not shown) is coupled to the actuator frame 440 to provide a flat uniform surface across the actuator frame. The cross member may be directly coupled to the actuator frame or may be attached via a bracket to prop the cross member with respect to other parts of the vehicle seat such as the recliner assembly (not shown).

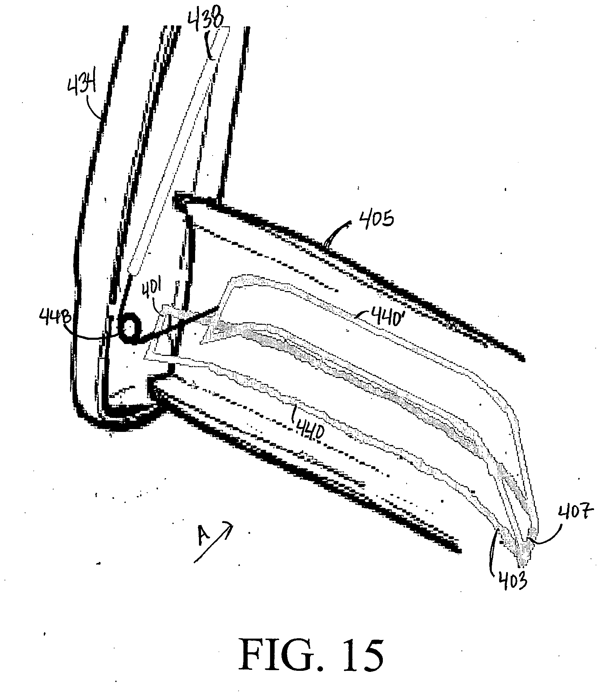

In yet another exemplary embodiment, as shown in FIG. 15 the actuator frame 440 is flexible with respect to the seat back portion 412. As the vehicle occupant O moves along the axis A the actuator frame pivots with respect to the side member 434 and the actuator frame 440 (attached thereto) rotates and slightly deforms with respect to the (lower) back portion 412. A flexible actuator frame 440 is illustrated in an inactive position (440) and an activated position (440') as illustrated in FIG 15. The link 43 8 is directly coupled to the first end 401 of the actuator frame 440. In another exemplary embodiment, the actuator frame 440 is a belt type lumbar system (not shown) extending across the lower portion of the seat back 412. The lumbar system may be of a two-way or four-way adjustable lumbar. As the lumbar moves rearward with respect to the vehicle a tensile force is applied to the link 438, thereby actuating the active head restraint system 430.

A pulley 448 guides the link 438 with respect to the seat back portion 412. The pulley 448 is coupled to a side member 434 and is configured in a manner to assist in transitioning the link 438 between vertical displacement and displacement along the A axis. As the first end 401 of the actuator frame 440 pivots about the side member 434 and second end 403 of the actuator frame, the link 438 is vertically displaced thereby actuating the head restraint 428. The pulley 448 is mounted to the side member 434 through a side bracket (not shown). In some instances where the seat frame 432 allows, the pulley 448 may be attached directly to the side member 434 without the side bracket.

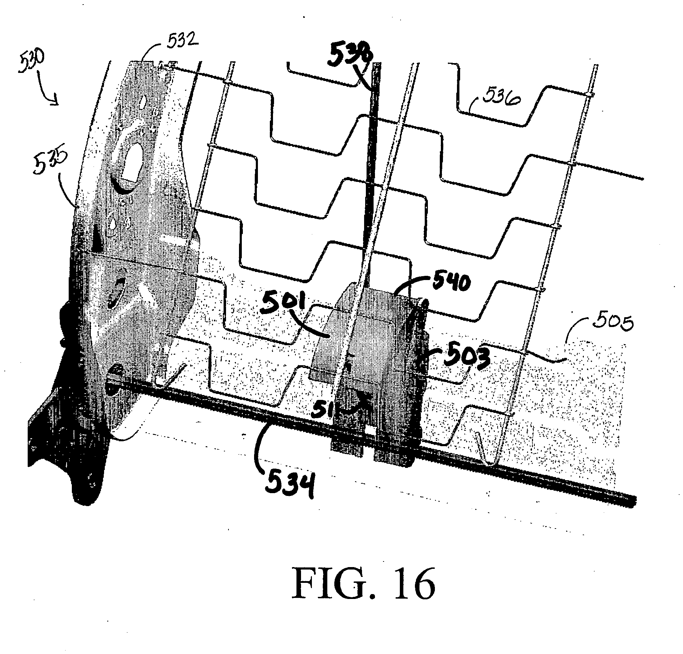

In yet another exemplary embodiment of an active head restraint system 530, as illustrated in FIGs 16-18B, an actuator 540 is pivotably mounted with respect to the seat frame 532. First and second members 501, 503 of the actuator 540 are pivotably connected a seat frame 532 and the a 538 is coupled to the second member 503 in a manner to be displaced when the first member 501 rotates with respect to the second member 503. The vehicle seat back includes a lower back member 505 which extends between the side members 535 of the seat frame 532. A lumbar frame 536 extends across the upper and lower regions of the seat back portion (not shown) which functions to support the vehicle occupant's O lumbar region. Moreover, a recliner rod 534 extends between side members 535 of the frame 532.

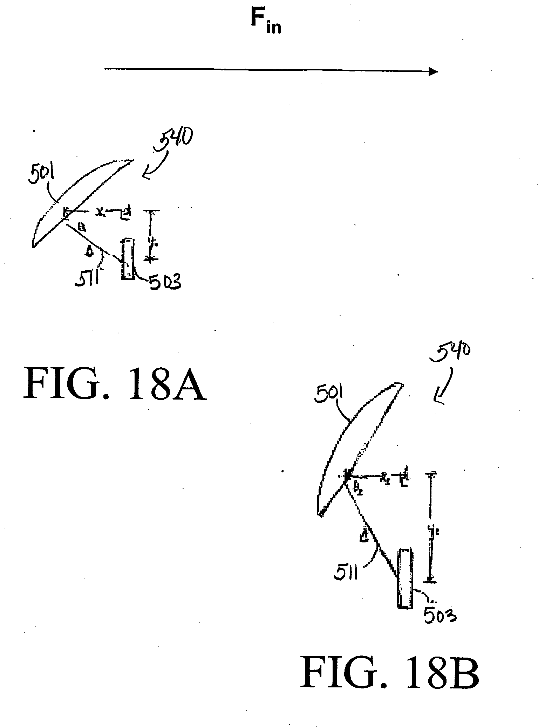

The first member 501 of the actuator 540 is free to rotate between the lumbar frame 536 and the lower back portion 505 at one end and it is pivotably connected to the second member 503 at its other end. The second member 503 of the actuator is coupled to the lower back member 505. The actuator 540 includes a cam link 511 coupled to the first member 501 and second member 503. The cam link 511 is a rigid member defined by the lengthwise dimension 'C', as represented in FIGs 18A-B. As the first member 501 of the actuator 540 moves along the A axis it pivots about the connection between the first and second members 501, 503 of the actuator 540. The second member 503 defines a slot 513 through which the cam link 511 may move transverse with respect to the second member. The cam link 511 pivots with respect to the first member 501 of the actuator at an angle theta ,Θ, and the displacement of the cam link 511 along the A axis is defined as the difference between *x₁* and *x₂.* The vertical displacement of the cam link is defined as the difference between *y₁* and *y₂ -* as shown in FIGs 18A-B - or the product of sinΘ and the fixed length of the cain link 511. Therefore the larger the angle the second member 503 is positioned at rest with respect to the seat frame 532 (theta, Θ) and/or the longer the cam link 511, the more the cam link 511 will vertically displace.

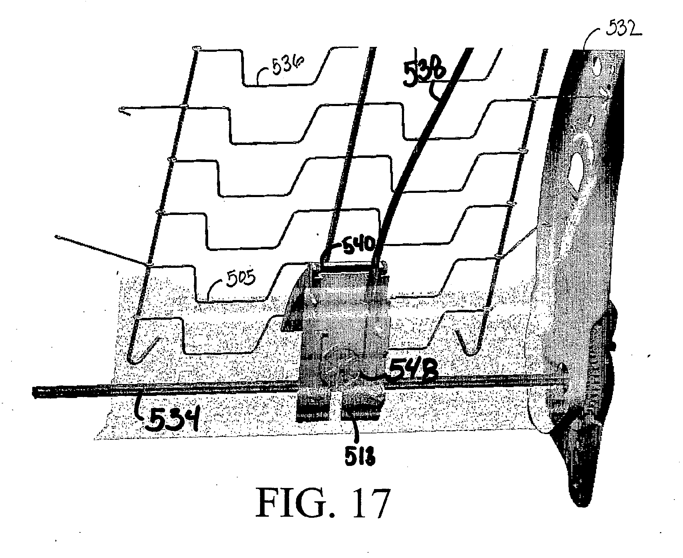

In the illustrated exemplary embodiment of FIG. 17 a pulley 548 is coupled to the cam link 511 and is slidable with respect to the second member 503. The link 538 is guided though the pulley 548 to displace the link upon the transverse movement of the pulley. As the cam link 511 moves downward with respect to the seat back portion 512 the link 538 is displaced thereby actuating the head restraint (not shown). The cam link 511 is connected about a center axis of the pulley 548. The force at which the link 538 is displaced will be twice as great as the force by which the cam link 511 moves rearward or displaces the pulley 548. While a pulley is utilized in the illustrated embodiment other cam surfaces or rollers may be utilized with the present head restraint system.

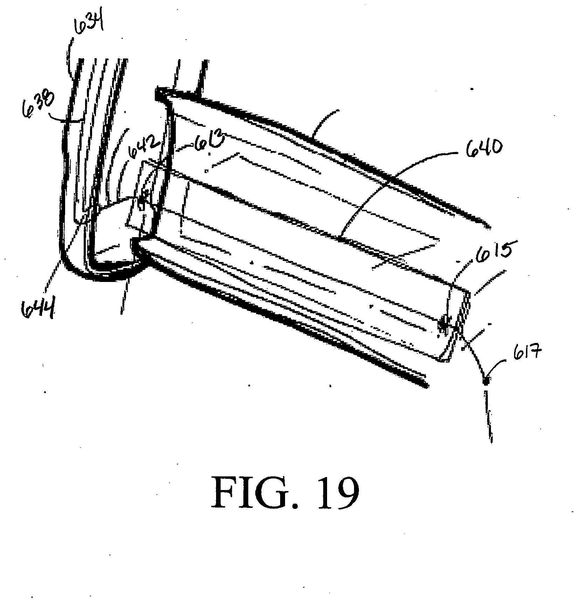

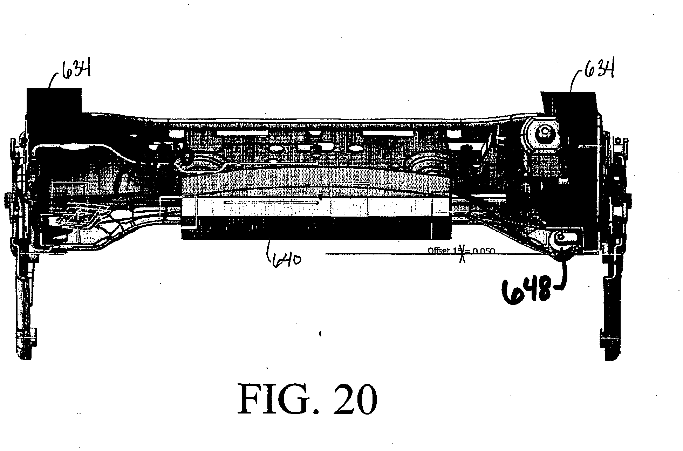

In yet another alternative exemplary embodiment, as illustrated in FIG. 19-20, the actuator 640 includes two orifices 613, 615 through which the link 638 may slide. In one exemplary embodiment, the link 638 is a Bowden cable having an inner portion 642 that is movable with respect to an outer portion 644. The inner portion 642 is routed through the actuator 640. Neither of the side members 634 includes a pulley, rather the outer portion 644 of the link 638 is anchored to one side member 634 (e.g., at location 617). In another not claimed exemplary embodiment, as shown in FIG. 20, the actuator 640 is flexible with respect to the seat back 612 and the link 638 is routed through the actuator 640. As the occupant's body weight is applied to the actuator 640 a tensile force is applied to the link 638. A pulley 648 is provided as shown in FIG. 20 through which the link 638 is routed. The pulley 648 is attached to a side member 634 of the vehicle seat frame.

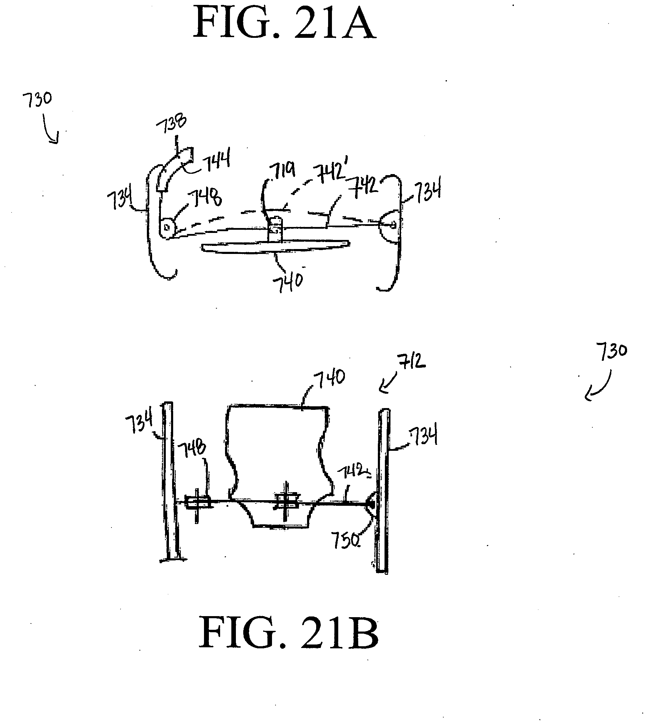

In another illustrated exemplary embodiment, as shown in FIGs 21A-B, the head restraint system 730 includes an actuator 740 rigidly coupled to the link 738 between the side members 734 so that movement of the actuator 740 displaces the link 738 in a manner to move the head restraint. The seat back portion includes side members 734 and the link 738 is coupled to a side member 734 through a bracket 750 or other means. The link 738 is guided through a pulley 748 to a fixed point on the head restraint. A lumbar frame or support is included in the seat back and the actuator 740 is mounted in front of the lumber support with respect to the seat back 712. The actuator 740 is rigidly coupled to the link 738 through a bushing 719 or other connector having low friction surface qualities. The link includes an inner portion 742 and outer portion 744. As the actuator is displaced with respect to the seat back 12, the inner portion 742' of the link 738 changes positions as shown in FIG. 21A. The actuator 740 may also be coupled to the link 738 though an orifice or slot in the bushing 719 through which the link may translate.

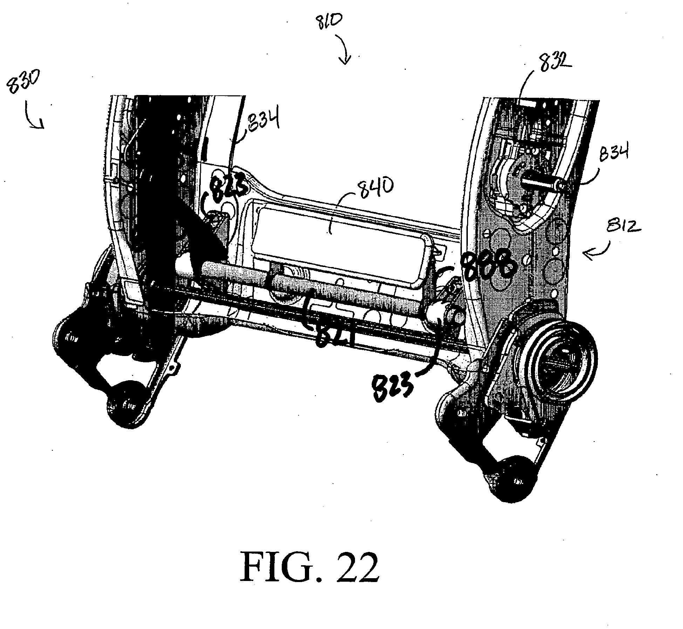

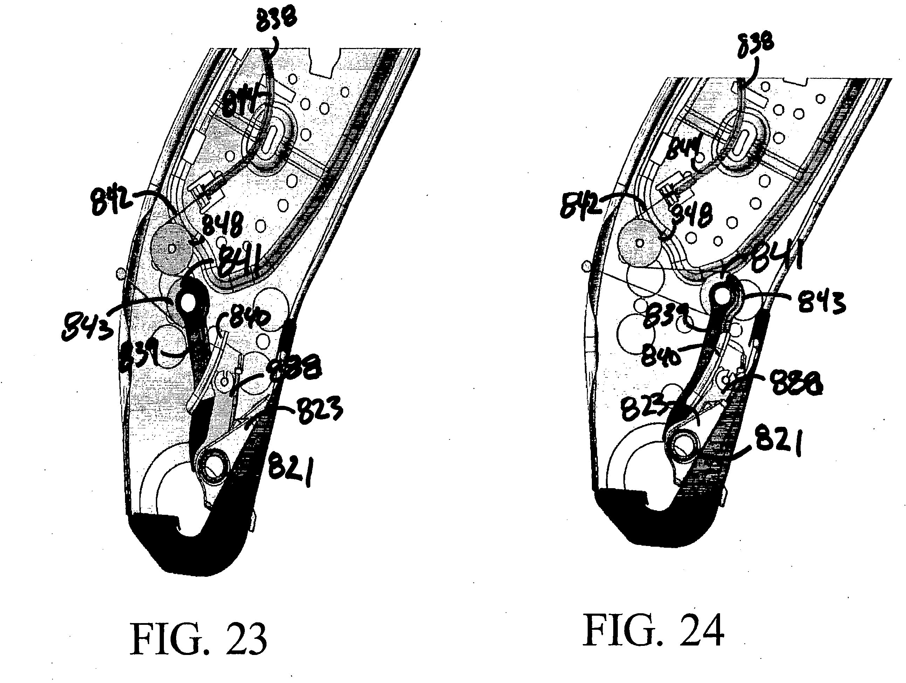

In another also not claimed exemplary embodiment, as illustrated in FIGs 22-24, an active head restraint system 830 for a vehicle seat 810. The seat back 812 includes a seat back frame 832 having side members 834. An actuator paddle 840 is pivotably connected with respect to the seat back frame 832. As the occupant's body weight shifts rearward with respect to the vehicle seat back frame 832, the actuator paddle 840 rotates clockwise or rearward (as illustrated in FIG. 24). The actuator paddle 840 includes at least one arm 888 which is coupled to a pivot tube 821. At least one block bearing 823 is coupled to the seat back frame 832 and configured in a manner to enable the pivot tube 821 to rotate with respect to the seat back frame 832. In the illustrated embodiment of FIG. 22, block bearings 823 are provided on each side member 834 of the seat back frame 832.

An actuator link 839 is coupled to the pivot tube 821 and configured to rotate with the pivot tube. At one end 843 of the actuator link 839 a pulley 841 is provided. A link 838 connected to the pulley 841 and routed around the pulley. The link 838 is a Bowden cable and includes an inner portion 842 and outer portion 844. As the actuator paddle 840 pivots with respect to the seat back 812 the actuator link 839 also rotates rearward, thereby extending link 838. In one exemplary embodiment, another pulley 848 is provided coupled to a side member 834 through which the link is 383 routed. Rotation of the actuator paddle 840 with respect to the seat back frame 832 activates the head restraint system 830. The pulley 848 thereby magnifies or enhances the force applied to the link 838, reducing the response time of the active,head restraint system 830.

It is important to note that the construction and arrangement of the elements of the actuator for an active head restraint system as shown in the preferred and other exemplary embodiments is illustrative only. Although only a few embodiments of the present invention have been described in detail in this disclosure, those skilled in the art who review this disclosure will readily appreciate that many modifications are possible (e.g. variations in sizes, dimensions, structures, shapes and proportions of the various elements, values of any parameters, mounting and/or connecting arrangements, use of materials, orientations, etc.) without materially departing from the novel teachings and advantages of the subject matter recited in this disclosure. Accordingly, all such modifications are intended to be included within the scope of the present invention.

## Claims

1. A vehicle seat (10, 210, 310), comprising:
a seat back (12, 112) having a seat back frame (32, 232, 332), the seat back frame (32, 232, 332) including a first side member (34, 334), a second side member (34, 334) and an upper cross support member coupled to the first side member and second side member; **characterized in that** the vehicle seat further comprises an active head restraint system (30, 130, 230, 330) having an actuator (40, 140, 240, 340) pivotably connected with respect to the seat back frame, wherein the actuator comprises a first arm (64, 364), a second arm (66, 366) and a cross bar member (68, 168, 368) located between the first and second arms; and a movable link (38, 138, 238, 338) coupled to the active head restraint system and the actuator; wherein the movable link is a cable,
wherein rotation of the actuator with respect to the seat back frame activates the head restraint system, and wherein the first and second arms are pivotably mounted to the first and second side members, respectively.

2. The vehicle seat of Claim 1, **characterized in that** the vehicle seat (10, 210, 310) further comprises a pulley (48, 348) coupled with respect to the seat back frame (32, 232, 332) and configured in a manner to guide the cable (38, 138, 238, 338) during actuation of the active head restraint.

3. The vehicle seat of Claim 1, **characterized in that** the actuator (40, 140, 240, 340) has the first arm (64, 264), the second arm (66, 366) and the cross bar member (68, 168, 368) as a single-piece member.

4. The vehicle seat of Claim 3, **characterized in that** the cross bar member (68, 168, 368) is positioned to interact with an occupant (O) upon a predetermined amount of rearward movement of the occupant with respect to the seat back frame (32, 232, 332) and wherein the actuator (40, 140, 240, 340) defines a response time that varies according to a distance between a pivot point (52, 352) of the actuator and the cross bar member.

5. The vehicle seat of Claim 4, **characterized in that** the vehicle seat further comprises:
an inboard recliner mechanism (174, 176, 374, 376) coupled to one side of the seat back and seat bottom portion;
an outboard recliner mechanism (174, 176, 374, 376) coupled to another side of the seat back and seat bottom portion; and
a recliner rod (178, 378) extending across the seat back connecting the inboard and outboard recliner mechanisms;
wherein the actuator (140, 340) is configured to avoid physical contact with the recliner rod (178, 378).

6. The vehicle seat of Claim 1, **characterized in that** the seat comprises at least one pivotable head rest support (258) mounted with respect to the upper cross support member (294) of the seat back frame (32, 232, 332); wherein the movable link (38, 138, 238, 338) is coupled to the actuator (40, 140, 240, 340) and biased with respect to the seat back frame; and wherein rotation of the actuator with respect to the seat back frame activates the head rest support.

7. The vehicle seat of Claim 6, **characterized in that** the link (38, 138, 238, 338) is a Bowden cable having an inner cable member (42, 342) and an outer sheath (44, 344), and wherein the inner cable member is moveable with respect to the outer sheath.

8. The vehicle seat of Claim 7, **characterized in that** the vehicle seat (10, 210, 310) further comprises a pulley (48, 348) coupled with respect to the seat back frame for guiding the cable during actuation of the active head restraint.

9. The vehicle seat of Claim 6, **characterized in that** the actuator (40, 140, 240, 340) has the first arm (64, 364), the second arm (66, 366) and the cross bar member (68, 168, 368) as a single-piece member.

10. The vehicle seat of Claim 9, **characterized in that** the cross bar member (68, 168, 368) is positioned to interact with an occupant (O) of the vehicle seat (10, 210, 310) upon a predetermined amount of rearward movement of the occupant with respect to the seat back frame (32, 232, 332) and wherein the actuator (40, 140, 240, 340) defines a response time that varies according to a distance between a pivot point (52, 352) of the actuator and the cross bar member.

11. A vehicle seat according to claim 1, **characterized in that** the vehicle seat (10, 210, 310) further comprises a head restraint (28, 228, 328);
wherein the head restraint is coupled to the seat back frame (32, 232, 332); wherein the seat back frame defines an axis and wherein the head restraint is movable with respect to the seat back portion along the axis in response to a displacement of the movable link (38, 138, 238, 338);
the first arm (64, 364) of the actuator being coupled to the link; and
wherein the seat frame portion includes a pulley (48, 348) coupled to the cable and wherein the pulley is configured in a manner to assist in moving the cable between the head restraint and the actuator.

12. A vehicle occupant seat, comprising:
a head restraint;
and a seat back portion, wherein the head restraint is coupled to the seat back portion; wherein the seat back portion defines an axis aligned with the direction of travel of the vehicle, **characterized in that** the head restraint is movable with respect to the seat back portion along the axis in response to a displacement of a link; wherein the seat back portion includes a lower back member (505) wherein the vehicle occupant seat further comprises;
an actuator (540) coupled to the lower back member; wherein the actuator comprises a first member (501) and second member (503) and wherein the first member is pivotably coupled with respect to the second member,
a cam link (511) coupled to the first member and second member;
and a pulley (548) coupled to the cam link and slidable with respect to the second member;
wherein the second member comprises a slot (513) through which the cam link may move transversely with respect to the second member; and
wherein the link is coupled to the second member and the head restraint; and
wherein the link is guided though the pulley in a manner to displace the link upon sliding movement of the pulley.

13. A vehicle seat (410), comprising:
a head restraint (428);
a seat back portion (412), wherein the head restraint is coupled to the seat back portion; wherein the seat back portion defines an axis aligned with a direction of travel of the vehicle **characterized in that** the head restraint is movable with respect to the seat back portion along the axis in response to a displacement of a link (438);
wherein the vehicle occupant seat further comprises an actuator frame (440) comprising a first end (401) and second end (403), the first end coupled to the link;
wherein the seat back portion further comprises a side member (434) and
wherein the second end of the actuator frame (440) is pivotably coupled to the side member via a panel hinge (407); and
wherein the link is a cable and the side back portion includes a pulley (448) coupled thereto and wherein the pulley is configured in a manner to assist in transitioning the cable between the head restraint and the first end of the actuator frame (440).

## Patentansprüche

1. Fahrzeugsitz (10, 210, 310) mit
einer Sitzlehne (12, 112) mit einem Sitzlehnenrahmen (32, 232, 332), der ein erstes Seitenelement (34, 334), ein zweites Seitenelement (34, 334) und ein an das erste Seitenelement und das zweite Seitenelement gekoppeltes oberes Kreuzstützelement aufweist, **dadurch gekennzeichnet, dass** der Fahrzeugsitz ferner ein aktives Kopfstützensystem (30, 130, 230, 330) mit einem Stellglied (40, 140, 240, 340), das schwenkbar mit dem Sitzlehnenrahmen verbunden ist, wobei das Stellglied einen ersten Arm (64, 364), einen zweiten Arm (66, 366) und ein zwischen dem ersten und dem zweiten Arm angeordnetes Querstangenelement (68, 168, 368) umfasst, und ein an das aktive Kopfstützensystem und das Stellglied gekoppeltes bewegliches Verbindungsglied (38, 138, 238, 338) umfasst, wobei das bewegliche Verbindungsglied ein Seil ist, wobei das Kopfstützensystem durch die Drehung des Stellglieds bezüglich des Sitzlehnenrahmens aktiviert wird und wobei der erste und der zweite Arm schwenkbar an das erste bzw. zweite Seitenelement montiert sind.

2. Fahrzeugsitz nach Anspruch 1, **dadurch gekennzeichnet, dass** der Fahrzeugsitz (10, 210, 310) ferner eine Riemenscheibe (48, 348) umfasst, die bezüglich des Sitzlehnenrahmens (32, 232, 332) gekoppelt und so konfiguriert ist, dass sie das Seil (38, 138, 238, 338) während der Betätigung der aktiven Kopfstütze führt.

3. Fahrzeugsitz nach Anspruch 1, **dadurch gekennzeichnet, dass** das Stellglied (40, 140, 240, 340) den ersten Arm (64, 364), den zweiten Arm (66, 366) und das Querstangenelement (68, 168, 368) als einteiliges Element hat.

4. Fahrzeugsitz nach Anspruch 3, **dadurch gekennzeichnet, dass** das Querstangenelement (68, 168, 368) so positioniert ist, dass es bei einem vorbestimmten Ausmaß an Rückwärtsbewegung eines Insassen (O) bezüglich des Sitzlehnenrahmens (32, 232, 332) mit dem Insassen zusammenwirkt, und wobei das Stellglied (40, 140, 240, 340) eine Reaktionszeit definiert, die gemäß einem Abstand zwischen einem Anlenkpunkt (52, 352) des Stellglieds und dem Querstangenelement variiert.

5. Fahrzeugsitz nach Anspruch 4, **dadurch gekennzeichnet, dass** der Fahrzeugsitz ferner Folgendes umfasst:
einen innenseitigen Lehnenverstellmechanismus (174, 176, 374, 376), der an eine Seite der Sitzlehne und des Sitzbodenabschnitts gekoppelt ist,
einen außenseitigen Lehnenverstellmechanismus (174, 176, 374, 376), der an eine andere Seite der Sitzlehne und des Sitzbodenabschnitts gekoppelt ist, und
einen Lehnenverstellstab (178, 378), der sich über die Sitzlehne erstreckt und den innenseitigen und
den außenseitigen Lehnenverstellmechanismus miteinander verbindet,
wobei das Stellglied (140, 340) so konfiguriert ist, dass ein physischer Kontakt mit dem Lehnenverstellstab (178, 378) vermieden wird.

6. Fahrzeugsitz nach Anspruch 1, **dadurch gekennzeichnet, dass** der Sitz mindestens eine schwenkbare Kopfstützenabstützung (258) umfasst, die bezüglich des oberen Kreuzstützelements (294) des Sitzlehnenrahmens (32, 232, 332) montiert ist, wobei das bewegliche Verbindungsglied (38, 138, 238, 338) an das Stellglied (40, 140, 240, 340) gekoppelt und bezüglich des Sitzlehnenrahmens vorgespannt ist, und wobei die Kopfstützenabstützung durch die Drehung des Stellglieds bezüglich des Sitzlehnenrahmens aktiviert wird.

7. Fahrzeugsitz nach Anspruch 6, **dadurch gekennzeichnet, dass** das Verbindungsglied (38, 138, 238, 338) ein Bowdenzug mit einem inneren Seilelement (42, 342) und einer äußeren Hülse (44, 344) ist und wobei das innere Seilelement bezüglich der äußeren Hülse beweglich ist.

8. Fahrzeugsitz nach Anspruch 7, **dadurch gekennzeichnet, dass** der Fahrzeugsitz (10, 210, 310) ferner eine Riemenscheibe (48, 348) umfasst, die bezüglich des Sitzlehnenrahmens gekoppelt ist und zur Führung des Seils während der Betätigung der aktiven Kopfstütze dient.

9. Fahrzeugsitz nach Anspruch 6, **dadurch gekennzeichnet, dass** das Stellglied (40, 140, 240, 340) den ersten Arm (64, 364), den zweiten Arm (66, 366) und das Querstangenelement (68, 168, 368) als einteiliges Element hat.

10. Fahrzeugsitz nach Anspruch 9, **dadurch gekennzeichnet, dass** das Querstangenelement (68, 168, 368) so positioniert ist, dass es bei einem vorbestimmten Ausmaß an Rückwärtsbewegung eines Insassen (O) bezüglich des Sitzlehnenrahmens (32, 232, 332) mit dem Insassen des Fahrzeugsitzes (10, 210, 310) zusammenwirkt, und wobei das Stellglied (40, 140, 240, 340) eine Reaktionszeit definiert, die gemäß einem Abstand zwischen einem Anlenkpunkt (52, 352) des Stellglieds und dem Querstangenelement variiert.

11. Fahrzeugsitz nach Anspruch 1, **dadurch gekennzeichnet, dass** der Fahrzeugsitz (10, 210, 310) ferner eine Kopfstütze (28, 228, 328) umfasst, wobei die Kopfstütze an den Sitzlehnenrahmen (32, 232, 332) gekoppelt ist, wobei der Sitzlehnenrahmen eine Achse definiert und wobei die Kopfstütze als Reaktion auf eine Verschiebung des beweglichen Verbindungsglieds (38, 138, 238, 338) bezüglich des Sitzlehnenteils entlang der Achse beweglich ist, wobei der erste Arm (64, 364) des Stellglieds an das Verbindungsglied gekoppelt ist und wobei der Sitzrahmenteil eine an das Seil gekoppelte Riemenscheibe (48, 348) aufweist und wobei die Riemenscheibe so konfiguriert ist, dass sie das Bewegen des Seils zwischen der Kopfstütze und dem Stellglied unterstützt.

12. Fahrzeuginsassensitz mit
einer Kopfstütze
und einem Sitzlehnenteil, wobei die Kopfstütze an den Sitzlehnenteil gekoppelt ist, wobei der Sitzlehnenteil eine auf die Fahrtrichtung des Fahrzeugs ausgerichtete Achse definiert, **dadurch gekennzeichnet, dass** die Kopfstütze als Reaktion auf eine Verschiebung eines Verbindungsglieds bezüglich des Sitzlehnenteils entlang der Achse beweglich ist, wobei der Sitzlehnenteil ein unteres Lehnenelement (505) aufweist, wobei der Fahrzeuginsassensitz ferner ein an das untere Lehnenelement gekoppeltes Stellglied (540) umfasst, wobei das Stellglied ein erstes Element (501) und ein zweites Element (503), wobei das erste Element schwenkbar bezüglich des zweiten Elements gekoppelt ist, ein Nockenverbindungsglied (511), das an das erste und das zweite Element gekoppelt ist, und eine Riemenscheibe (548), die an das Nockenverbindungsglied gekoppelt und bezüglich des zweiten Elements schiebbar ist, umfasst, wobei das zweite Element einen Schlitz (513) umfasst, durch den sich das Nockenverbindungsglied quer bezüglich des zweiten Elements bewegen kann und wobei das Verbindungsglied an das zweite Element und die Kopfstütze gekoppelt ist und wobei das Verbindungsglied so durch die Riemenscheibe geführt ist, dass das Verbindungsglied bei einer Gleitbewegung der Riemenscheibe verschoben wird.

13. Fahrzeugsitz (410) mit
einer Kopfstütze (428)
und einem Sitzlehnenteil (412), wobei die Kopfstütze an den Sitzlehnenteil gekoppelt ist,
wobei der Sitzlehnenteil eine auf die Fahrtrichtung des Fahrzeugs ausgerichtete Achse definiert, **dadurch gekennzeichnet, dass** die Kopfstütze als Reaktion auf eine Verschiebung eines Verbindungsglieds (438) bezüglich des Sitzlehnenteils entlang der Achse beweglich ist, wobei der Fahrzeuginsassensitz ferner einen Stellgliedrahmen (440) mit einem ersten Ende (401) und einem zweiten Ende (403) umfasst, wobei das erste Ende an das Verbindungsglied gekoppelt ist,
wobei der Sitzlehnenteil ferner ein Seitenelement (434) umfasst und wobei das zweite Ende des Stellgliedrahmens (440) über ein Wandscharnier (407) schwenkbar an das Seitenelement gekoppelt ist, und wobei das Verbindungsglied ein Seil ist und der Sitzlehnenteil eine daran gekoppelte Riemenscheibe (448) aufweist und wobei die Riemenscheibe so konfiguriert ist, dass sie den Übergang des Seils zwischen der Kopfstütze und dem ersten Ende des Stellgliedrahmens (440) unterstützt.

## Revendications

1. Siège de véhicule (10, 210, 310) comprenant :
un dossier de siège (12, 112) ayant un châssis de dossier de siège (32, 232, 332), le châssis de dossier de siège (32, 232, 332) comportant un premier organe latéral (34, 334), un deuxième organe latéral (34, 334) et un organe de support transversal supérieur accouplé au premier organe latéral et au deuxième organe latéral ;
**caractérisé en ce que** le siège de véhicule comprend en outre un système de retenue de tête actif (30, 130, 230, 330) ayant un actionneur (40, 140, 240, 340) connecté de manière pivotante par rapport au châssis de dossier de siège,
l'actionneur comprenant un premier bras (64, 364),
un deuxième bras (66, 366) et un organe de traverse (68, 168, 368) situé entre les premier et
deuxième bras ; et une liaison mobile (38, 138, 238, 338) accouplée au système de retenue de tête actif et à l'actionneur ; la liaison mobile étant un câble, la rotation de l'actionneur par rapport au châssis de dossier de siège activant le système de retenue de tête et les premier et deuxième bras étant montés de manière pivotante sur les premier et deuxième organes latéraux, respectivement.

2. Siège de véhicule selon la revendication 1, **caractérisé en ce que** le siège de véhicule (10, 210, 310) comprend en outre une poulie (48, 348) accouplée par rapport au châssis de dossier de siège (32, 232, 332) et configurée de manière à guider le câble (38, 138, 238, 338) au cours de l'actionnement du système de retenue de tête actif.

3. Siège de véhicule selon la revendication 1, **caractérisé en ce que** l'actionneur (40, 140, 240, 340) comprend le premier bras (64, 364), le deuxième bras (66, 366) et l'organe de traverse (68, 168, 368) sous forme d'organe d'une seule pièce.

4. Siège de véhicule selon la revendication 3, **caractérisé en ce que** l'organe de traverse (68, 168, 368) est positionné de manière à interagir avec un occupant (0) en cas de quantité prédéterminée de mouvement vers l'arrière de l'occupant par rapport au châssis de dossier de siège (32, 232, 332) et dans lequel l'actionneur (40, 140, 240, 340) définit un temps de réponse qui varie en fonction d'une distance entre un pivot (52, 352) de l'actionneur et l'organe de traverse.

5. Siège de véhicule selon la revendication 4, **caractérisé en ce que** le siège de véhicule comprend en outre :
un mécanisme d'inclinaison intérieur (174, 176, 374, 376) accouplé d'un côté du dossier de siège et de la portion du fond du siège ;
un mécanisme d'inclinaison extérieur (174, 176, 374, 376) accouplé à un autre côté du dossier de siège et de la portion du fond du siège ; et
une barre d'inclinaison (178, 378) s'étendant en travers du dossier du siège et reliant les mécanismes d'inclinaison intérieur et extérieur ;
l'actionneur (140, 340) étant configuré de manière à éviter un contact physique avec la barre d'inclinaison (178, 378).

6. Siège de véhicule selon la revendication 1, **caractérisé en ce que** le siège comprend au moins un support d'appuie-tête pivotant (258) monté par rapport à l'organe de support transversal supérieur (294) du châssis de dossier de siège (32, 232, 332) ; la liaison mobile (38, 138, 238, 338) étant accouplée à l'actionneur (40, 140, 240, 340) et étant sollicitée par rapport au châssis de dossier de siège ; et la rotation de l'actionneur par rapport au châssis de dossier de siège activant le support d'appuie-tête.

7. Siège de véhicule selon la revendication 6, **caractérisé en ce que** la liaison (38, 138, 238, 338) est un câble Bowden ayant un organe de câble interne (42, 342) et une gaine extérieure (44, 344) et dans lequel l'organe de câble interne peut être déplacé par rapport à la gaine extérieure.

8. Siège de véhicule selon la revendication 7, **caractérisé en ce que** le siège de véhicule (10, 210, 310) comprend en outre une poulie (48, 348) accouplée par rapport au châssis de dossier de siège pour guider le câble au cours de l'actionnement du système de retenue de tête actif.

9. Siège de véhicule selon la revendication 6, **caractérisé en ce que** l'actionneur (40, 140, 240, 340) comprend le premier bras (64, 364), le deuxième bras (66, 366) et l'organe de traverse (68, 168, 368) sous forme d'organe d'une seule pièce.

10. Siège de véhicule selon la revendication 9, **caractérisé en ce que** l'organe de traverse (68, 168, 368) est positionné de manière à interagir avec un occupant (O) du siège de véhicule (10, 210, 310) en cas de quantité prédéterminée de mouvement vers l'arrière de l'occupant par rapport au châssis de dossier de siège (32, 232, 332) et dans lequel l'actionneur (40, 140, 240, 340) définit un temps de réponse qui varie en fonction d'une distance entre un pivot (52, 352) de l'actionneur et l'organe de traverse.

11. Siège de véhicule selon la revendication 1, **caractérisé en ce que** le siège de véhicule (10, 210, 310) comprend en outre un système de retenue de tête (28, 228, 328) ;
le système de retenue de tête étant accouplé au châssis de dossier de siège (32, 232, 332) ; le châssis de dossier de siège définissant un axe et le système de retenue de tête étant déplaçable par rapport à la portion de dossier de siège le long de l'axe en réponse à un déplacement de la liaison mobile (38, 138, 238, 338) ;
le premier bras (64, 364) de l'actionneur étant accouplé à la liaison ; et
la portion de châssis de siège comportant une poulie (48, 348) accouplée au câble et la poulie étant configurée de manière à faciliter le mouvement du câble entre le système de retenue de tête et l'actionneur.

12. Siège d'occupant de véhicule, comprenant :
un système de retenue de tête ;
et une portion de dossier de siège, le système de retenue de tête étant accouplé à la portion de dossier de siège ; la portion de dossier de siège définissant un axe aligné avec la direction de déplacement du véhicule, **caractérisé en ce que** le système de retenue de tête peut être déplacé par rapport à la portion de dossier de siège le long de l'axe en réponse à un déplacement d'une liaison ; la portion de dossier de siège comportant un organe de dossier inférieur (505), le siège d'occupant du véhicule comprenant en outre : un actionneur (540) accouplé à l'organe de dossier inférieur ; l'actionneur comprenant un premier organe (501) et un deuxième organe (503) et le premier organe étant accouplé de manière à pouvoir pivoter par rapport au deuxième organe ; une liaison par came (511) accouplée au premier organe et au deuxième organe ; et une poulie (548) accouplée à la liaison par came et pouvant coulisser par rapport au deuxième organe ;
le deuxième organe comprenant une fente (513) à travers laquelle la liaison par came peut se déplacer transversalement par rapport au deuxième organe ; et la liaison étant accouplée au deuxième organe et au système de retenue de tête ; et la liaison étant guidée à travers la poulie de manière à déplacer la liaison lors du mouvement de coulissement de la poulie.

13. Siège de véhicule (410), comprenant :
un système de retenue de tête (428) ;
une portion de dossier de siège (412), le système de retenue de tête étant accouplé à la portion de dossier de siège ; la portion de dossier de siège définissant un axe aligné avec une direction de déplacement du véhicule, **caractérisé en ce que** le système de retenue de tête est déplaçable par rapport à la portion de dossier de siège le long de l'axe en réponse à un déplacement d'une liaison (438) ;
le siège de l'occupant du véhicule comprenant en outre un châssis d'actionneur (440) comprenant une première extrémité (401) et une deuxième extrémité (403), la première extrémité étant accouplée à la liaison ;
la portion de dossier de siège comprenant en outre un organe latéral (434) et la deuxième extrémité du châssis d'actionneur (440) étant accouplée de manière pivotante à l'organe latéral par le biais d'une charnière à panneau (407) ; et
la liaison étant un câble et la portion de dossier latérale comportant une poulie (448) accouplée à celle-ci et la poulie étant configurée de manière à faciliter la transition du câble entre le système de retenue de tête et la première extrémité du châssis d'actionneur (440).
